# EUROPEAN PATENT SPECIFICATION

(11) **EP 2 405 662 B1**
(45) Date of publication and mention of the grant of the patent: **26.12.2012**
(21) Application number: 10168835.6
(22) Date of filing: 08.07.2010
(51) Int. Cl.: H04N 13/00, G02B 27/01, A63F 13/02, H04N 13/04

(54) **An interactive glasses system**
Interaktives Brillensystem
Système de lunettes interactives

(43) Date of publication of application: 11.01.2012
(73) Proprietor: Advanced Digital Broadcast S.A., 1292 Chambesy (CH)
(72) Inventor: Micewicz, Jaroslaw, 65-119, Zielona Gora (PL)
(74) Representative: Pawlowski, Adam

(56) References cited:
- EP-A1- 1 715 682
- US-A1- 2002 097 498
- US-A1- 2009 059 159

## Description

The present invention relates to interactive glasses.

Electronic glasses, such as shutter glasses, play an important role in modern video display systems. The electronic glasses comprise various processing systems for enhancing video viewing experience. Some of the electronic glasses comprise interactive functionality, i.e. their operation may be controlled by the user, e.g. via dedicated buttons operable by hand or by sensors detecting movements of head.

A US patent US6188442 discloses a multiviewer display system with shutter glasses having a microswitch or a proximity sensor positioned at a location where it is activated only when the shutter glasses are worn by the user. However, use of such a sensor is susceptible to accidental activation, for example during movement, cleaning or handling of the glasses. For example mere picking up the glasses would trigger the proximity sensor. In an unfolded position, when the glasses are put aside, there may be objects residing between the temples of the glasses. Such objects will likely cause triggering the prior art glasses on.

A US patent application US2009059159 discloses an eyewear with radiation detection system, with a "being worn" stress sensor at the hinge of the temple, configured to detect the value of the stress sensor beyond a certain preset value. The eyewear does not have a multi-user functionality.

The aim of the present invention is to provide interactive glasses with functionality adapting automatically to the user, having a simple construction and having relatively high immunity to accidental activation.

The object of the present invention is an interactive glasses system comprising a frame wearable on a head of a user, at least one sensor embedded in the frame and a data processor, wherein the sensor is configured to provide a differential signal indicative of change in dimension of the part of the frame in which the sensor is embedded and the data processor is configured to process the measured differential signal such as to output an activity signal indicative of presence of the frame on the head of the user, and wherein the data processor comprises a user detector configured to compare the measured differential signal with a plurality of personal difference values and output a personal identifier associated with the personal difference value closest to the measured differential signal.

The data processor may comprise an activity detector configured to compare the measured differential signal with a minimum difference value and output the activity signal when the measured differential signal is higher than the minimum difference over a period longer than a minimum activity time.

The data processor may comprise a calibrating unit configured to adapt each of the personal difference values to a function of a plurality of last measured differential signals indicated as closest to the particular personal difference value.

The at least one sensor can be incorporated within the side part or the front part of the frame.

The at least one sensor can be incorporated within the side part of the frame and can be configured to measure change in dimension in the horizontal and vertical axis.

The data processor can be embedded within the frame and communicatively connected with the at least one sensor.

The data processor can be separate from the frame and the system further comprises a sensor data transmitter embedded within the frame, communicatively connected with the at least one sensor and configured to transmit measured differential signal to the data processor.

The data processor may comprise an activity monitor configured to detect fluctuations of the measured differential signal and to output an intensity signal indicative of fluctuations of the measured differential signal.

The activity monitor can be configured to detect periodic fluctuations having frequency from 30 to 250 Hz and to output an intensity frequency signal indicative of frequency of fluctuations.

The activity monitor can be configured to detect incidental peaks in fluctuations and to output a peak intensity signal indicative of detected peaks.

Another object of the present invention is a computer-implemented method for controlling an interactive glasses system, the system comprising a frame wearable on a head of a user, at least one sensor embedded in the frame and a data processor, the method comprising the steps of collecting, via the sensor, a differential signal indicative of change in dimension of the part of the frame in which the sensor is embedded, processing, in the data processor, the measured differential signal such as to output an activity signal indicative of presence of the frame on the head of the user and comparing, in the data processor, the measured differential signal with a plurality of personal difference values and outputting a personal identifier associated with the personal difference value closest to the measured differential signal.

The method may further comprise the steps of comparing the measured differential signal with a minimum difference value and outputting the activity signal when the measured differential signal is higher than the minimum difference over a period longer than a minimum activity time.

The method may further comprise the step of adapting each of the personal difference values to a function of a plurality of last measured differential signals indicated as closest to the particular personal difference value.

The change in dimension can be measured in the horizontal and vertical axis.

The method may further comprise the step of transmitting measured differential signal via a data transmitter to a data processor separate from the frame.

The method may further comprise the steps of detecting fluctuations of the measured differential signal and outputting an intensity signal indicative of fluctuations of the measured differential signal.

The method may comprise the steps of detecting periodic fluctuations having frequency from 30 to 250 Hz and outputting an intensity frequency signal indicative of frequency of fluctuations.

The method may comprise the steps of detecting incidental peaks in fluctuations and outputting a peak intensity signal indicative of detected peaks.

The object of the invention is also a computer program comprising program code means for performing all the steps of the method of the invention when said program is run on a computer, as well as a computer readable medium storing computer-executable instructions performing all the steps of the method of the invention when executed on a computer.

The present invention will be shown by means of an exemplary embodiment on a drawing, in which:
Fig. 1 shows the interactive glasses according to the invention;
Fig. 2A-2B show schematically deformation of the glasses in a horizontal plane;
Fig. 3A-3C show schematically deformation of the glasses in a vertical plane;
Fig. 4A-4C show schematically examples of measured differential signal; and
Fig. 5 shows schematic of the interactive glasses system according to the invention.

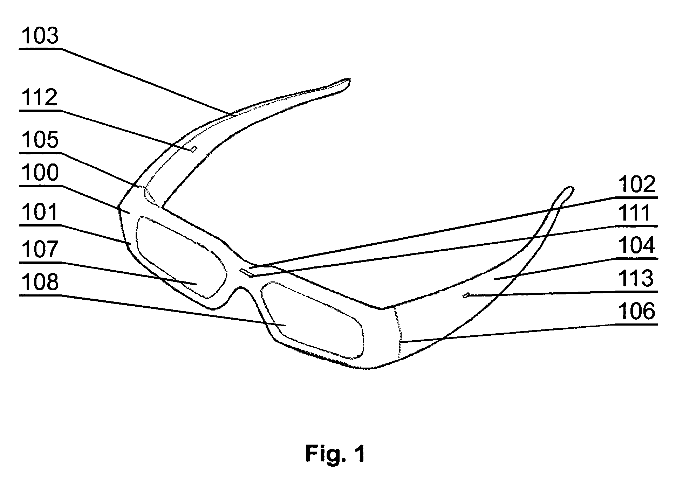

Fig. 1 shows the interactive glasses according to the invention. The glasses comprise a frame 100 wearable on a head of a user, with a front part 101 having a middle part 102 and two side parts 103, 104, preferably connected with the front part 101 via hinges 105, 106. The frame 100 can be made of plastics, which facilitates embedding of components within the frame during the process of molding of the frame or by welding or adhering the components into pre-formed compartments in the frame. The frame may hold two glasses 107, 108. The glasses may be glasses specially designed to enhance video watching experience, such as LCD shutter glasses or polarized glasses for watching stereoscopic signals. The glasses may also be a dedicated head-on display wherein the image is displayed directly in the area of the glasses 107. 108. The invention is also applicable to other types of glasses with a frame wearable on a head of a user, even typical vision-correcting glasses, in which interactive functionality is to be employed. The frame 100 has embedded at least one sensor 111, 112, 113, which is configured to provide a differential signal indicative of change in dimension of the part of the frame 101, 103, 104 in which the sensor is embedded. Preferably, the sensors 111, 112, 113 are embedded close to the external surface of the frame, where the changes in dimension are higher than in the middle of the frame. The sensors 111, 112, 113 can be for example gages configured to measure strain.

When the glasses are not used, they are typically usually put down on some surface, such as a table or a glasses box, in a folded or unfolded position. Depending on the placement of the glasses, i.e. with glasses upwards or downwards or perpendicular to the base surface, one or more parts of the glasses are subject to forces being component forces of the dead weight of the glasses, provided that the glasses are not covered by any other object.

When the glasses are manipulated, for example during movement from one place to another, during the operation of folding and unfolding, during cleaning, one or more parts of the glasses are subject to external forces in general higher than the dead weight of the glasses, which change relatively quickly.

When the glasses are worn, i.e. present on the head of the user, they are subject to external forces of a generally constant magnitude which hold the frame on he head of the user, the magnitude depending on the size of user's head.

By embedding sensors 111, 112, 113 in the parts 101, 103, 104 of the frame 100, the change in dimension of that particular part of the frame can be measured, providing an indication of the forces acting on that part of the frame.

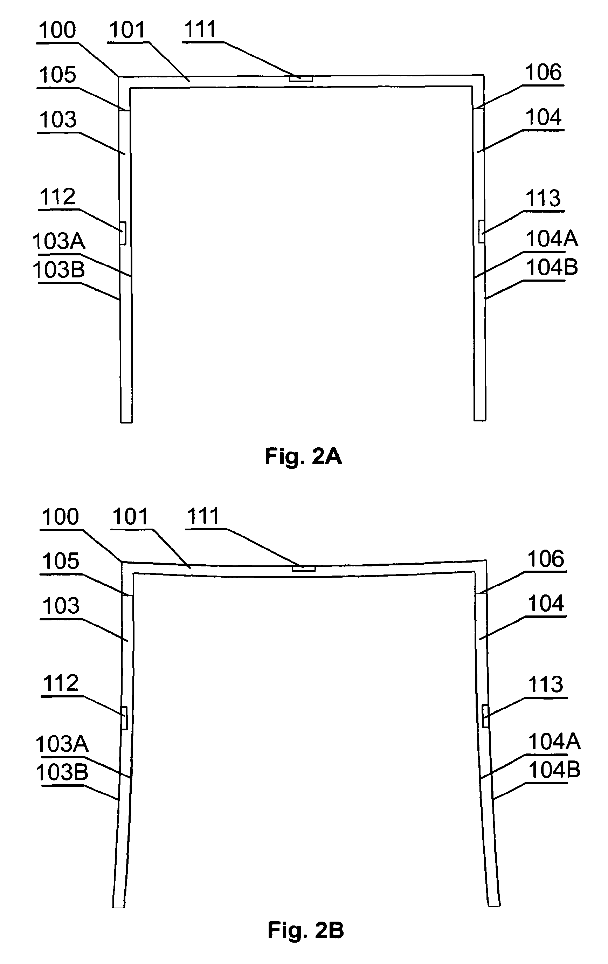

Figs. 2A-2B show schematically deformation of the glasses in a horizontal plane when the glasses are present on the head of the user when the head of the user is positioned vertically. Fig. 2A shows a top view the frame in a neutral position, when it is not used, for example placed on a table. Fig. 2B shows, in an exaggerated manner to clarify the concept, deformation of the frame when it is put on the head of the user. The side parts 103, 104 are forced away from the centre (the head of the user), therefore the internal side 103A, 104A of the side parts 103, 104 is subject to stretching, while the external side 103B, 104B of the side parts 103, 104 is subject to compression. The stretching and compression can be effectively measured by sensors 112, 113, for example embedded close to the external side 103B, 104B of the side parts 103, 104 as shown in Fig. 2A-2B. Preferably, the sensors 112, 113 are placed in the region of the side part which undergoes most stretching, which is typically in the middle between the hinges 105, 106 and the end of the frame which contacts the head of the user. The optimal position of placement of the sensor 112, 113 can be found by analyzing the geometry of the frame and the properties (such as stiffness) of the frame along its side length. The front part 101 of the frame also undergoes deformation, although substantially smaller than the side parts, even if some of the stretching force from the side parts 103, 104 is compensated by the hinges 105, 106. Therefore, a sensor 111, placed preferably in the nose part 102 of the front part 103, can measure the change in dimension of the front part 101.

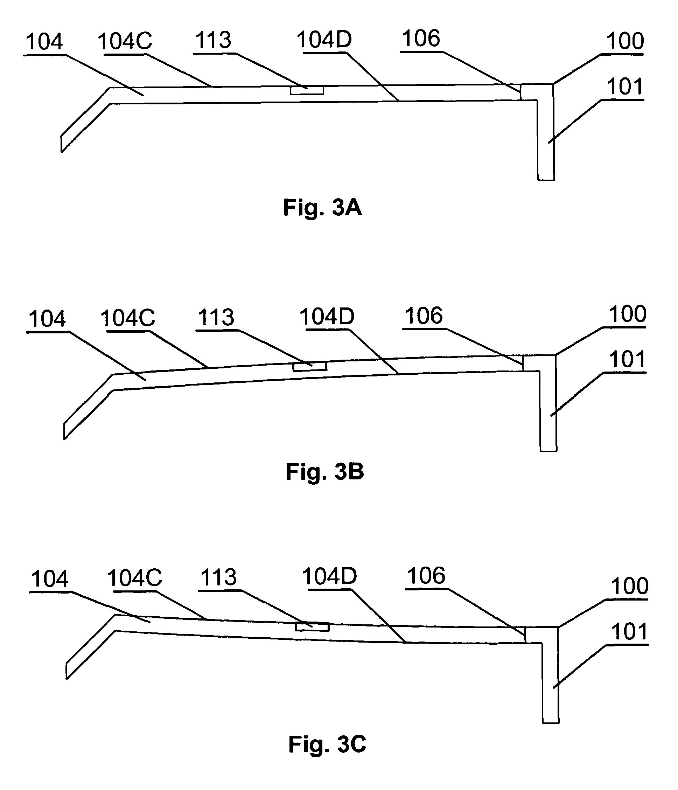

Figs. 3A-3C show deformation of the glasses in a vertical plane when the glasses are present on the head of the user when the head of the user is positioned vertically. Fig. 3A shows a side view of the frame in a neutral position, when it is not used and placed such that no forces act in the vertical plane shown, for example placed on a table with glasses 107, 108 towards the surface of the table. In the vertical plane, the forces acting on the glasses depend on the shape of the head of the user and the height of the nose with respect to the height of the ears. Fig. 3B shows a case for the frame worn on head of users having the nose higher above the ears than in case of Fig. 3C. In the vertical plane, the top 104C and bottom 104D sides of the side parts 103, 104 of the frame 100 may undergo compression or deformation, depending on the user. The change in dimension can be effectively measured by sensors 112, 113. The sensors 112, 113 can be dual-axis sensors, configured to measure change in dimension both within a horizontal and vertical plane. Alternatively, single-axis separate sensors can be embedded within the side parts of the frame, each in a point subject most to change in dimension in the particular plane.

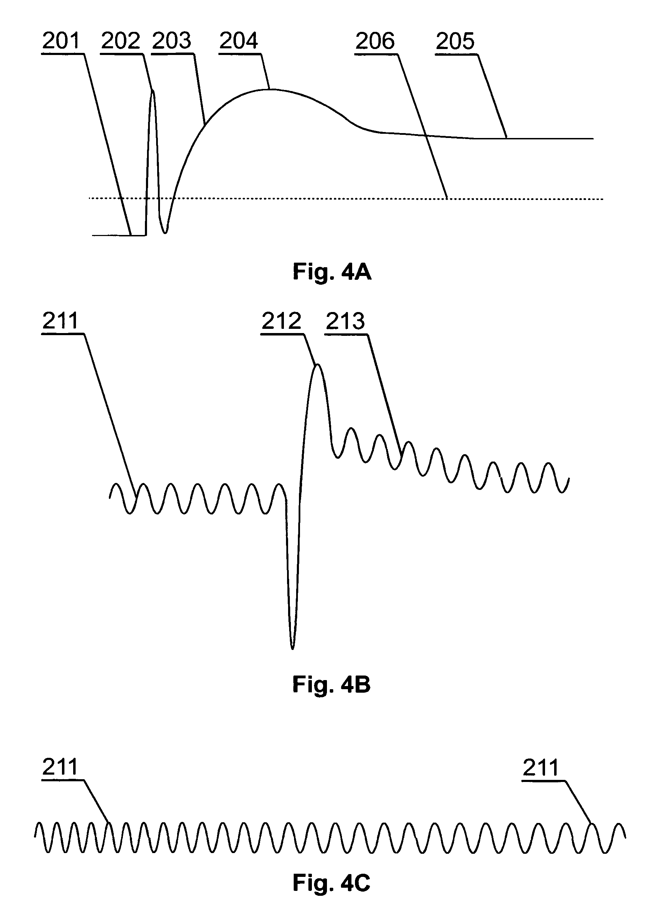

Fig. 4A shows schematically example of a differential signal measured when the glasses are put on the head of the user, for example signal measured by a sensor 112, 113 embedded in a side part 103, 104 of the frame 100. When the frame is not used, the sensor indicates a low differential value 201, corresponding to the difference in dimension relating to dead weight forces acting on the frame part. When the user holds the frame, a fluctuation of the change in dimension may appear in form of one or more peaks 202. Next, when the frame is put on the head, a steady increase in change in dimension 203 can be observed, when the side parts of the frame are stretched outwards until a maximum value 204, after which the frame stabilizes on the head of the user and reaches a stable position, corresponding to a stable change in dimension 205. When the frame is put on the head of the user, the measured change in dimension is higher than a predefined minimum difference value 206.

Fig. 4B shows schematically example of small-scale fluctuations in dimension of a frame, which is held stabilized on the head of the user, measured by a high-precision sensor. The fluctuations may reflect the heart pulse of the user, which is imparted to the frame via the fragment of the frame contacting the temple area. The fluctuations may be stable 211 when the user remains steady. A number of peaks 212 may appear due to user movements, movements of the head or parts of the head, such as blinking which affects the front part of the frame. After a peak 212 the fluctuations may stabilize over some period 213. The readings of blinking, heart rate, and for example fluctuations determined as chewing may be used to differentiate between users wearing the glasses. Such a differentiation can be input to a content selection system of a device cooperating with the glasses according to the present invention.

Fig. 4C shows schematically example of change in frequency of small-scale fluctuations in dimension of a frame which is held stabilized on the head of the user, measured by a high-precision sensor. The fluctuations reflecting the heart pulse of the user may change their frequency over time, for example a period of a higher-frequency fluctuations 211 may be followed by a period of lower-frequency fluctuations 212, for example when the user excitement during watching of a video signal decreases or the user falls asleep.

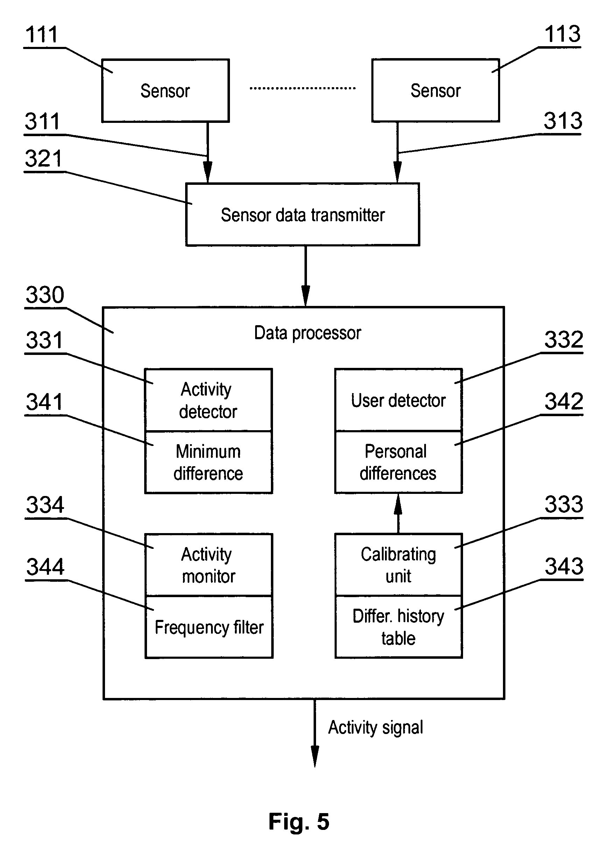

Fig. 5 shows schematically the interactive glasses system according to the invention. At least one sensor 111-113 is configured to provide a measured differential signal 311-313 indicative of measured change in dimension in a part 101, 103, 104 of the frame. The measured differential signals 311-313 can be collected, preferably by wired connection, by a sensor data transmitter 321 embedded in the frame 100. The sensor data transmitter 321 transmits the measured differential signals to a data processor 330. In case the data processor 330 is embedded in the frame 100, the measured differential signals can be transmitted to the data processor 330 via a wired connection from the sensor data transmitter 321 or directly from the sensors 111-113. In case the data processor 330 is outside the frame 100, for example it forms a separate module or is embedded in another device such as a video display unit, such as a display set, a video player, a television set-top box, a game console, a personal computer, the measured differential signals can be transmitted via the sensor data transmitter 321 by a dedicated wired channel or a wireless channel, using proprietary technology or a standard technology such as WiFi, Bluetooth, etc. The data processor 330 is configured to process the measured differential signal such as to output an activity signal indicative of presence of the frame 100 on the head of the user.

The activity signal is generated by an activity detector 331, configured to compare the measured differential signal with a minimum difference value and output the activity signal when the measured differential signal is higher than the minimum difference value over a period longer than a minimum activity time, for example 3 seconds. Referring to the example shown in Fig. 4A, the activity signal will be generated at some point of the stable differential signal 205. The value of the minimum difference value, predefined in a minimum difference value container 341, is determined individually according to factors such as the geometry of the frame 100, the material it is made of or the positioning of the sensor. The activity signal can be used by the interactive glasses system to control the operation of the glasses, i.e. to power on certain modules, such as a transceiver of LCD shutter glasses used to communicate with a stereoscopic display unit, a display of a head-mounted display, etc. This allows decreasing power consumption in the period when the user does not use the glasses, by powering only the data processor circuitry detecting the measured differential signals from the sensors, while the other components of the system may be powered on only upon detection that the frame 100 is present on the head of the user. The activity signal may be transmitted to units external to the interactive glasses system, such as external video displays, to communicate that a user has started sing the glasses.

The data processor 330 preferably further comprises a user detector 332, configured to compare the measured differential signal with a plurality of personal difference values stored in a personal difference values table 342, and output a personal identifier associated with the personal difference value closest to the measured differential signal. Such configuration allows storing individual difference values characteristic for different users of the system and automatic detection the user that wears the glasses. In case a plurality of sensors are used, a set of individual difference values can be stored for each user and the comparison may involve the set of values and selection of the set best matching a particular user. The personal identifier output by the user detector 332 can be used by external systems to adapt their operation to a particular user, for example by a television set-top box to adjust a set of favorite television channels for a particular user or adapt advertising to preferences of the user stored in the set-top box.

Due to wear and tear of the frame 100, as well as change of characteristics of particular users, such as growing up of children, the individual difference values may require change over time. Preferably, a calibrating unit 333 is configured to adapt each of the personal difference values to a function of a plurality of last measured difference values indicated as closest to the particular personal difference value. The calibrating unit 333 may make use of a difference values history table 343, for example having the following contents:

| User_ID | Next values |
|---|---|
| User_1 | 110,111,112,112,112 |
| User_2 | 120, 121, 122, 123, 123 |
| User_3 | 130,130,132,133,134 |

In the example shown above, the table stores 5 last measured differential signals for each user. The values increase systematically over time, which indicates systematic wear of the frame, such as systematic loosening of the hinges, or growing p of the users. The function used to adapt the personal difference values may be an averaging function, therefore the value of personal difference value for User_1 would be recently adapted to 111, for User_2 to 122, for User_3 to 132. Other functions can be used, such as a median function or a function disregarding measurements deviating from the reference value more than a threshold. The above example is to be understood as illustrative only, the actual difference values for particular users may have much closer ranges, depending on the type and accuracy of sensors used. In case of a plurality of sensors, the values read by each sensor are stored in separate columns of the table.

Furthermore, the data processor 330 may comprise an activity monitor configured to detect fluctuations of the measured differential signal and to output an intensity signal indicative of fluctuations of the measured differential signal. Examples of fluctuations of the measured differential signal are shown in Figs. 4B and 4C. The fluctuations are to be understood as small modulations of the average value of the measured differential signal. The fluctuations can be detected by means of known detecting circuits comprising various frequency filters 344. The intensity signal may represent the current activity level of the user wearing the interactive glasses.

The activity monitor 334 can be configured to detect periodic fluctuations having frequency from 30 to 250 Hz and to output an intensity frequency signal indicative of frequency of fluctuations. Such signal may be indicative of the heart pulse of the user. The intensity frequency signal may periodically transmit information about the current frequency of fluctuations as a direct value measured in Hz or other measurement unit. The intensity frequency signal may be used by external components to adjust their operation to the activity level of the user, for example in case of interactive television systems to adjust the volume of sound or type of content displayed to the user.

The activity monitor 334 can be further configured to detect incidental peaks in fluctuations and to output a peak intensity signal indicative of detected peaks, such as the peaks 212 of Fig. 4B. The peak intensity signal can be output each time a peak, i.e. a quick change of high amplitude, of intensity is detected. The peak intensity signal can be output periodically and inform about the number of peaks detected in a given period. The peak intensity signal can be used by external components to detect the activity level of the user, for example a low number of peaks may indicate that the user falls asleep.

The modules 331-334, 341-344 may form dedicated electronic modules of the data processor 330 or software modules operable by the processor. Therefore, the interactive glasses system may be controlled by a computer-implemented method, in which a differential signal indicative of change in dimension of the part of the frame is collected via a sensor and the measured differential signal is processed in the data processor such as to output an activity signal indicative of presence of the frame on the head of the user.

It can be easily recognized, by one skilled in the art, that the aforementioned method for controlling the interactive glasses system may be performed and/or controlled by one or more computer programs. Such computer programs are typically executed by utilizing the computing resources of the interactive glasses system, such as the processor 330, embedded within the frame of the glasses or outside the frame, in a computing device such as personal computers, personal digital assistants, cellular telephones, receivers and decoders of digital television or the like, or a device dedicated for the interactive glasses system. Applications are stored in non-volatile memory, for example a flash memory or volatile memory, for example RAM and are executed by a processor. The remote controller or the operated target device i.e. tv set, set top box according to the present invention, optionally comprises such a memory. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. An interactive glasses system comprising
- a frame (100) wearable on a head of a user,
- at least one sensor (111, 112, 113) embedded in the frame (100) and
- a data processor (330),
- wherein the sensor (111, 112, 113) is configured to provide a differential signal indicative of change in dimension of the part (101, 103, 104) of the frame in which the sensor is embedded and
- wherein the data processor (330) is configured to process the measured differential signal such as to output an activity signal indicative of presence of the frame (100) on the head of the user,
**characterized in that**
- the data processor (330) comprises a user detector (332) configured to compare the measured differential signal with a plurality of personal difference values and output a personal identifier associated with the personal difference value closest to the measured differential signal.

2. The interactive glasses system according to claim 1, **characterized in that** the data processor (330) comprises an activity detector (331) configured to compare the measured differential signal with a minimum difference value and output the activity signal when the measured differential signal is higher than the minimum difference over a period longer than a minimum activity time.

3. The interactive glasses system according to claim 1, **characterized in that** the data processor (330) comprises a calibrating unit (333) configured to adapt each of the personal difference values to a function of a plurality of last measured differential signals indicated as closest to the particular personal difference value.

4. The interactive glasses system according to any of previous claims, **characterized in that** the at least one sensor (111, 112, 113) is incorporated within the side part (103, 104) or the front part (101) of the frame (100).

5. The interactive glasses system according to claim 1, **characterized in that** the at least one sensor (111, 112, 113) is incorporated within the side part (103, 104) of the frame (100) and is configured to measure change in dimension in the horizontal and vertical axis.

6. The interactive glasses system according to any of previous claims, **characterized in that** the data processor (330) is embedded within the frame (100) and communicatively connected with the at least one sensor (111, 112, 113).

7. The interactive glasses system according to any of claims 1-5, **characterized in that** the data processor (330) is separate from the frame (100) and the system further comprises a sensor data transmitter (321) embedded within the frame (100), communicatively connected with the at least one sensor (111, 112, 113) and configured to transmit measured differential signal to the data processor (330).

8. The interactive glasses system according to any of previous claims, **characterized in that** the data processor (330) comprises an activity monitor (334) configured to detect fluctuations of the measured differential signal and to output an intensity signal indicative of fluctuations of the measured differential signal.

9. The interactive glasses system according to claim 8, **characterized in that** the activity monitor (334) is configured to detect periodic fluctuations having frequency from 30 to 250 Hz and to output an intensity frequency signal indicative of frequency of fluctuations.

10. The interactive glasses system according to claim 8, **characterized in that** the activity monitor (334) is configured to detect incidental peaks in fluctuations and to output a peak intensity signal indicative of detected peaks.

11. A computer-implemented method for controlling an interactive glasses system, the system comprising a frame (100) wearable on a head of a user, at least one sensor (111, 112, 113) embedded in the frame (100) and a data processor (330), the method comprising the steps of
- collecting, via the sensor (111, 112, 113), a differential signal indicative of change in dimension of the part (101, 103, 104) of the frame in which the sensor is embedded and
- processing, in the data processor (330), the measured differential signal such as to output an activity signal indicative of presence of the frame (100) on the head of the user,
**characterized in that** the method further comprises the step of
- comparing, in the data processor (330), the measured differential signal with a plurality of personal difference values and outputting a personal identifier associated with the personal difference value closest to the measured differential signal.

12. A computer program comprising program code means for performing all the steps of the computer-implemented method according to claim 11 when said program is run on a computer.

13. A computer readable medium storing computer-executable instructions performing all the steps of the computer-implemented method according to claim 11 when executed on a computer.

## Patentansprüche

1. Interaktives Brillensystem, umfassend:
- einen Rahmen (100), der an einem Kopf eines Benutzers tragbar ist,
- zumindest einen Sensor (111, 112, 113), der in den Rahmen (100) eingebettet ist, und
- einen Datenprozessor (330),
- worin der Sensor (111, 112, 113) konfiguriert ist, um ein Differenzsignal zu erzeugen, das eine Dimensionsänderung jenes Teils (101, 103, 104) des Rahmens indiziert, in das der Sensor eingebettet ist, und
- worin der Datenprozessor (330) konfiguriert ist, um das gemessene Differenzsignal derart zu bearbeiten, dass ein Aktivitätssignal ausgegeben wird, das das Vorhandensein des Rahmens (100) auf dem Kopf des Benutzers anzeigt,
**dadurch gekennzeichnet, dass**
- der Datenprozessor (330) einen Benutzerdetektor (332) aufweist, der konfiguriert ist, um das gemessene Differenzsignal mit einer Mehrzahl von persönlichen Differenzwerten zu vergleichen und einen Personenidentifizierer auszugeben, der den dem gemessenen Differenzsignal nächsten persönlichen Differenzwert zugeordnet ist.

2. Das interaktive Brillensystem nach Anspruch 1, **dadurch gekennzeichnet, dass** der Datenprozessor (130) einen Aktivitätsdetektor (331) aufweist, der konfiguriert ist, um das gemessene Differenzsignal mit einem minimalen Differenzwert zu vergleichen und das Aktivitätssignal auszugeben, wenn das gemessene Differenzsignal über eine längere Dauer als eine minimale Aktivitätszeit höher als die minimale Differenz.

3. Das interaktive Brillensystem nach Anspruch 1, **dadurch gekennzeichnet, dass** der Datenprozessor (330) eine Kalibriereinheit (333) aufweist, die konfiguriert ist, um jeden der persönlichen Differenzwerte an eine Funktion einer Mehrzahl zuletzt gemessener Differenzsignale, die als dem jeweiligen Differenzwert am nächsten angezeigt werden, anzupassen.

4. Das interaktive Brillensystem nach einem der vorhergehenden Ansprüche, **dadurch gekennzeichnet, dass** der zumindest eine Sensor (111, 112, 113) in dem Seitenteil (103, 104) oder dem vorderen Teil (101) des Rahmens (100) eingebaut ist.

5. Das interaktive Brillensystem nach Anspruch 1, **dadurch gekennzeichnet, dass** der zumindest eine Sensor (111, 112, 113) in das Seitenteil (103, 104) des Rahmens eingebaut ist und konfiguriert ist, um eine Dimensionsänderung in der horizontalen und in der vertikalen Achse zu messen.

6. Das interaktive Brillensysten nach einem der vorhergehenden Ansprüche, **dadurch gekennzeichnet, dass** der Datenprozessor (330) in den Rahmen (100) eingebettet ist und mit dem zumindest einen Sensor (111, 112, 113) kommunikativ verbunden ist.

7. Das interaktive Brillensystem nach einem der Ansprüche 1 bis 5, **dadurch gekennzeichnet, dass** der Datenprozessor (330) von dem Rahmen (100) getrennt ist, und das System ferner einen Sensordatensender aufweist, der in den Rahmen (100) eingebettet ist, mit dem zumindest einen Sensor (111, 112, 113) kommunikativ verbunden ist und konfiguriert ist, um das gemessene Differenzssignal zu dem Datenprozessor (330) zu senden.

8. Das interaktive Brillensystem nach einem der vorhergehenden Ansprüche, **dadurch gekennzeichnet, dass** der Datenprozessor (330) einen Aktivitätsmonitor (334) aufweist, der konfiguriert ist, um Fluktuationen des gemessenen Differenzsignals zu erfassen und ein Intensitätsignal auszugeben, das Fluktuationen des gemessenen Differenzssignals anzeigt.

9. Das interaktive Brillensystem nach Anspruch 8, **dadurch gekennzeichnet, dass** der Aktivitätsmonitor (334) konfiguriert ist, und periodische Fluktuationen in einer Frequenz von 30 bis 250Hz zu erfassen und ein Intensitätsfrequenzsignal auszugeben, das die Frequenz von Fluktuationen anzeigt.

10. Das interaktive Brillensystem nach Anspruch 8, **dadurch gekennzeichnet, dass** der Aktivitätsmonitor (334) konfiguriert ist, um auftretende Spitzen in Fluktuationen zu erfassen und ein Spitzenintensitätssignal auszugeben, das die erfassten Spitzen anzeigt.

11. Computerimplementiertes Verfahren zum Steuern eines interaktiven Brillensystems, wobei das System einen Rahmen (100), der auf einem Kopf eines Benutzers tragbar ist, zumindest einen Sensor (111, 112, 113), der in den Rahmen (100) eingebettet ist, sowie einen Datenprozessor (330) aufweist, wobei das Verfahren die Schritte umfasst:
- Sammeln, über den Sensor (111, 112, 113), eines Differenzsignals, das eine Dimensionsänderung jenes Teils (101, 103, 104) des Rahmens anzeigt, in den der Sensor eingebettet ist, und
- Bearbeiten, in dem Datenprozessor (330), des gemessenen Differenzsignals, um ein Aktivitätssignal auszugeben, das das Vorhandensein des Rahmens (100) auf dem Kopf des Benutzers anzeigt,
**dadurch gekennzeichnet, dass** das Verfahren ferner den Schritt umfasst:
- Vergleichen, in dem Datenprozessor (330), des gemessenen Differenzsignals mit einer Mehrzahl von persönlichen Differenzwerten, und Ausgeben eines persönlichen Identifizierers, der dem persönlichen Differenzwert zugeordnet ist, der dem gemessenen Differenzsignal am nächsten ist.

12. Computerprogramm, das ein Programmcodemittel aufweist, um alle Schritte des computerimplementierten Verfahrens gemäß Anspruch 1 durchzuführen, wenn das Programm auf einem Computer läuft.

13. Computerlesbares Medium, das computerausführbare Anweisungen speichert, die alle die Schritte des computerimplementierten Verfahrens gemäß Anspruch 11 durchführen, wenn es auf einem Computer ausgeführt wird.

## Revendications

1. Système de lunettes interactives, comprenant :
- une monture (100) pouvant être portée sur une tête d'un utilisateur,
- au moins un capteur (111, 112, 113) incorporé dans la monture (100) et
- un processeur de données (330),
- dans lequel le capteur (111, 112, 113) est configuré pour fournir un signal différentiel indicatif de changement de dimension de la partie (101, 103, 104) de la monture dans laquelle le capteur est incorporé, et
- dans lequel le processeur de données (330) est configuré pour traiter le signal différentiel mesuré afin de produire un signal d'activité indicatif de présence de la monture (100) sur la tête de l'utilisateur,
**caractérisé en ce que**
- le processeur de données (330) comprend un détecteur d'utilisateur (332) configuré pour comparer le signal différentiel mesuré à une pluralité de valeurs de différence personnelle et produire un identifiant personnel associé à la valeur de différence personnelle la plus proche du signal différentiel mesuré.

2. Système de lunettes interactives selon la revendication 1, **caractérisé en ce que** le processeur de données (330) comprend un détecteur d'activité (331) configuré pour comparer le signal différentiel mesuré à une valeur de différence minimum et produire le signal d'activité lorsque le signal différentiel mesuré est supérieur à la différence minimum durant une période plus longue d'un temps d'activité minimum.

3. Système de lunettes interactives selon la revendication 1, **caractérisé en ce que** le processeur de données (330) comprend une unité de calibration (333) configurée pour adapter chacune des valeurs de différence personnelle à une fonction d'une pluralité de derniers signaux différentiels mesurés indiqués comme étant les plus proches de la valeur de différence personnelle particulière.

4. Système de lunettes interactives selon une quelconque des revendications précédentes, **caractérisé en ce que** l'au moins un capteur (111, 112, 113) est incorporé dans la partie latérale (103, 104) ou la partie avant (101) de la monture (100).

5. Système de lunettes interactives selon la revendication 1, **caractérisé en ce que** l'au moins un capteur (111, 112, 113) est incorporé dans la partie latérale (103, 104) de la monture (100) et est configuré pour mesurer un changement de dimension dans l'axe horizontal et vertical.

6. Système de lunettes interactives selon une quelconque des revendications précédentes, **caractérisé en ce que** le processeur de données (330) est incorporé dans la monture (100) et connecté en communication avec l'au moins un capteur (111, 112, 113).

7. Système de lunettes interactives selon une quelconque des revendications 1 à 5, **caractérisé en ce que** le processeur de données (330) est séparé de la monture (100) et le système comprend en outre un émetteur de données de capteur (321) incorporé dans la monture (100), connecté en communication avec l'au moins un capteur (111, 112, 113) et configuré pour transmettre un signal différentiel mesuré au processeur de données (330).

8. Système de lunettes interactives selon une quelconque des revendications précédentes, **caractérisé en ce que** le processeur de données (330) comprend un moniteur d'activité (334) configuré pour détecter des fluctuations du signal différentiel mesuré et pour produire un signal d'intensité indicatif de fluctuations du signal différentiel mesuré.

9. Système de lunettes interactives selon la revendication 8, **caractérisé en ce que** le moniteur d'activité (334) est configuré pour détecter des fluctuations périodiques possédant une fréquence de 30 à 250 Hz et pour produire un signal de fréquence d'intensité indicatif de la fréquence de fluctuations.

10. Système de lunettes interactives selon la revendication 8, **caractérisé en ce que** le moniteur d'activité (334) est configuré pour détecter des pics accessoires dans des fluctuations et pour produire un signal d'intensité de pic indicatif de pics détectés.

11. Procédé implémenté par ordinateur pour commander un système de lunettes interactives, le système comprenant une monture (100) pouvant être portée sur une tête d'un utilisateur, au moins un capteur (111, 112, 113) incorporé dans la monture (100) et un processeur de données (330), le procédé comprenant les étapes de :
- collecte, par l'intermédiaire du capteur (111, 112, 113), d'un signal différentiel indicatif de changement d'une dimension de la partie (101, 103, 104) de la monture dans laquelle le capteur est incorporé, et
- traitement, dans le processeur de données (330), du signal différentiel mesuré afin de produire un signal d'activité indicatif de présence de la monture (100) sur la tête de l'utilisateur,
**caractérisé en ce que** le procédé comprend en outre l'étape de :
- comparaison, dans le processeur de données (330), du signal différentiel mesuré à une pluralité de valeurs de différence personnelle et production d'un identifiant personnel associé à la valeur de différence personnelle la plus proche du signal différentiel mesuré.

12. Programme d'ordinateur comprenant des moyens codes de programme pour réaliser toutes les étapes du procédé implémenté par ordinateur selon la revendication 11 lorsque ledit programme est exécuté sur un ordinateur.

13. Support lisible par ordinateur stockant des instructions exécutables par ordinateur réalisant toutes les étapes du procédé implémenté par ordinateur selon la revendication 11 lorsqu'il est exécuté sur un ordinateur.
